# EUROPÄISCHE PATENTSCHRIFT

(11) **EP 2 224 513 B1**
(45) Veröffentlichungstag und Bekanntmachung des Hinweises auf die Patenterteilung: **03.10.2012**
(21) Anmeldenummer: 10001090.9
(22) Anmeldetag: 03.02.2010
(51) Int. Cl.: H01M 2/10

(54) **Akkupack mit im Gehäusedeckel integrierter Überwachungselektronik**
Battery pack with monitoring electronics integrated in the lid of the housing
Batterie dotée d'un système électronique de surveillance intégré dans un couvercle de boîtier

(30) Priorität: 27.02.2009 DE 102009012176
(43) Veröffentlichungstag der Anmeldung: 01.09.2010
(73) Patentinhaber: Andreas Stihl AG & Co. KG, 71336 Waiblingen (DE)
(72) Erfinder: Reber, Volker, Dipl.-Ing., 74544 Michelbach an der Bilz (DE)
(74) Vertreter: Wasmuth, Rolf

(56) Entgegenhaltungen:
- WO-A1-2007/033689
- WO-A1-2008/018714
- WO-A2-2008/021964
- JP-A- 2007 311 706
- JP-A- 2008 066 001

## Beschreibung

Die Erfindung betrifft einen Akkupack für ein elektrisches Arbeitsgerät, insbesondere für ein handgeführtes Arbeitsgerät wie eine Heckenschere, eine Motorkettensäge, einen Trennschleifer, einen Freischneider oder dgl. nach dem Oberbegriff des Anspruchs 1.

Akkupacks sind allgemein bekannt und bestehen aus einer Vielzahl von im Akkupackgehäuse angeordneten Akkuzellen, die in geeigneter Weise parallel oder in Reihe miteinander elektrisch verbunden sind, um eine gewünschte Akkupackspannung bzw. Akkupackleistung bereitzustellen.

Als Akkuzellen werden z. B. Lithium-Ionen, Lithiumpolymer oder dgl. Zellen verwendet, um hohe Betriebszeiten der damit betriebenen Geräte zu erzielen.

Auf Lithium basierende Akkuzellen benötigen Überwachungsschaltungen, um einerseits ein die Zelle zerstörendes Tiefentladen sicher zu verhindern und andererseits bei zu hohen Strömen oder zu hoher Temperatur die Zelle zum Schutz abzuschalten. Derartige Schutzschaltungen bestehen aus auf einer Platine angeordneten elektronischen Bauteilen und werden zusammen mit den Akkuzellen im Gehäuse des Akkupacks angeordnet.

Aus der WO 2007/033689 A1 ist ein Akkupack für ein Elektrohandwerkzeuggerät bekannt, der eine Vielzahl von Akkuzellen und eine Leiterplatte mit einer Überwachungselektronik aufweist. Die Leiterplatte ist in einem Bauraum eines Gehäuseteils aufgenommen, wobei zwischen der Innenwand des Gehäuseteils und der Leiterplatte ein Moosgummielement angeordnet ist, wodurch die Leiterplatte mit Abstand im Gehäuseteil liegt. Nach der Montage der Leiterplatte im Gehäuseteil wird diese mit einem Harz vergossen, so dass die Leiterplatte mit dem Gehäuseteil fest verbunden ist

Der Erfindung liegt die Aufgabe zugrunde, einen Akkupack für ein elektrisches Arbeitsgerät nach dem Oberbegriff des Anspruchs 1 derart auszubilden, dass die Überwachungsschaltung in einem Gehäuseteil lagesicher zu vergießen ist, um in einfacher Weise gegen Vibrationen und Umwelteinflüsse geschützt zu sein.

Die Aufgabe wird erfindungsgemäß nach den kennzeichnenden Merkmalen des Anspruchs 1 gelöst.

Die im Gehäusedeckel ausgebildete Aufnahmeschale liegt im Innenraum des Akkupackgehäuses und nimmt die Platine der Überwachungsschaltung vollständig auf. Die Platine liegt dabei etwa parallel zur Stirnseite des Gehäusedeckels mit Abstand zu dem Boden der Aufnahmeschale, so dass zwischen der Platine, dem Boden der Aufnahmeschale und einem äußeren Schalenrand ein Füllraum begrenzt ist. Zweckmäßig liegen von der Platine getragene Bauteile der elektronischen Überwachungsschaltung im Füllraum und damit den Akkuzellen abgewandt, wobei der Füllraum mit einer ausgehärteten Vergussmasse ausgefüllt ist.

Die Ausbildung der Aufnahmeschale im Deckel gewährleistet ein sicheres, vollständiges Vergießen der elektronischen Bauteile der Überwachungsschaltung, so dass diese mechanisch fest mit dem Deckel verbunden und gegen Umwelteinflüsse vollständig geschützt sind.

Über Abstandshalter wird die Platine mit vorgegebenem Abstand zum Boden der Aufnahmeschale gehalten, wobei zweckmäßig die Abstandshalter mit ihren freien Enden spielfrei in Positionieröffnungen der Platine eingreifen und diese in ihrer Lage in der Aufnahmeschale ausrichten. Dadurch ist ein definierter Füllraum geschaffen, nach dessen Ausfüllen ein vollständiges Umschließen der elektronischen Bauteile der Überwachungsschaltung sichergestellt ist.

Bevorzugt ist der Schalenrand über einen Teilumfang vom Deckelrand des Gehäuses gebildet, wobei der Platinenrand insbesondere mit dem Schalenrand einen vorzugsweise umlaufenden Spalt begrenzt. Der Schalenrand kann über die Platine überstehen, wobei am Schalenrand mindestens ein Niederhalter vorgesehen ist, der den zugewandten Platinenrand übergreift. Vorzugsweise am gegenüberliegenden Platinenrand ist ein insbesondere federnder Rasthaken in der Aufnahmeschale vorgesehen, der den zugewandten Platinenrand übergreift. Dadurch kann die Platine in die Aufnahmeschale eingeklipst werden, wobei ein Aufschwimmen der Platine beim Einfüllen der Vergussmasse durch die Niederhalter und den Rasthaken sicher verhindert ist. Die verdrängte Luft und die Vergussmasse können über den zwischen dem Platinenrand und dem Schalenrand gebildeten Spalt austreten. Ein dichtes, vollständiges Umschließen jedes einzelnen Bauteils auf der bestückten Platinenseite ist gewährleistet.

Zweckmäßig ist im Boden der Aufnahmeschale ein Anzeigeelement und/oder ein Betätigungselement vorgesehen, das von einem Dichtelement umgeben ist, welches sich über die gesamte Höhe des Füllraums erstreckt. Das Dichtelement besteht aus einem Schaummaterial, insbesondere aus Moosgummi und wird zwischen der Platine und dem Boden der Aufnahmeschale verspannt gehalten. Dadurch ist eine feste Positionierung des Dichtelementes gewährleistet, so dass sich dessen Lage auch beim Eingießen der Vergussmasse nicht ändert.

In Weiterbildung der Erfindung ist auf der bestückten Platinenseite zumindest ein Anschlussstecker für Anschlussleitungen vorgesehen, so dass - nach Aushärten der Vergussmasse - der Stecker mit den Anschlussleitungen in der ausgehärteten Vergussmasse liegt. Die Steckverbindung selbst ist somit gegen Umwelteinflüsse wie Korrosion oder dgl. geschützt, so dass auch bei harten Einsatzbedingungen die elektrische Kontaktierung der Stecker gewährleistet bleibt.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in perspektivischer Ansicht einen Akkupack aus einem Akkupackgehäuse mit einem Deckel,
- Fig. 2: eine Draufsicht auf den Deckel nach Fig. 1,
- Fig. 3: einen Teilschnitt durch den Deckel längs der Schnittebene III-III in Fig. 1,
- Fig. 4: eine Innenansicht des Deckels nach Fig. 2,
- Fig. 5: einen Schnitt längs der Schnittebene V-V in Fig. 4,
- Fig. 6: einen Schnitt längs der Schnittebene VI-VI in Fig. 4,
- Fig. 7: einen Schnitt gemäß Fig. 6 durch einen mit Vergussmasse gefüllten Füllraum zwischen der Platine und dem Boden der Aufnahmeschale;
- Fig. 8: einen Schnitt gemäß Fig. 6 durch eine mit Vergussmasse vollständig gefüllte Aufnahmeschale.

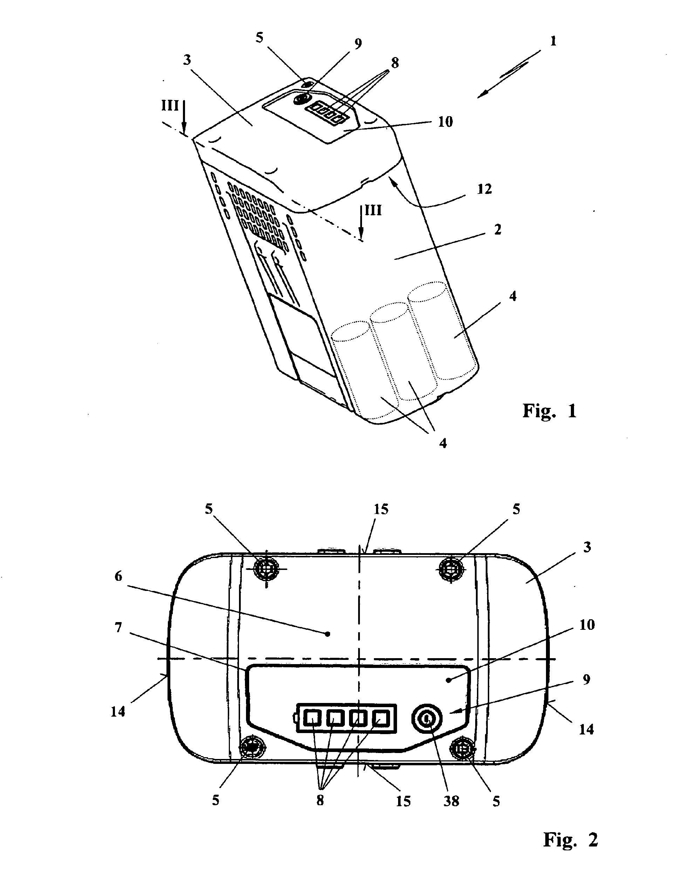

In Fig. 1 ist ein Akkupack 1 schematisch in perspektivischer Darstellung gezeigt. Ein derartiger Akkupack dient als Energiequelle für ein elektrisches Arbeitsgerät, insbesondere für ein handgeführtes Arbeitsgerät wie eine Motorkettensäge, eine Heckenschere, einen Trennschleifer, einen Freischneider, einen Kantenscheider, einen Hochentaster, ein Blasgerät, ein Sprühgerät, ein Sauggerät, ein Erdbohrgerät, ein Kombimotorgerät für multifunktionelle Vorsätze, ein Kehrgerät, eine Motorhacke, eine Bodenfräse, einen Hochdruckreiniger, einen Rasenmäher, einen Vertikutierer, einen Häcksler, einen Nass- oder Trockensauger oder dgl. Arbeitsgerät, welches vorzugsweise tragbar ist.

Der Akkupack 1 besteht aus einem Gehäuse 2 und einem das Gehäuse verschließenden Gehäusedeckel 3, wobei innerhalb des Akkugehäuses 2 eine Vielzahl einzelner Akkuzellen 4 stehend oder liegend angeordnet sind. Die Akkuzellen 4 sind elektrisch leitend derart miteinander verbunden, dass unter Verwendung von Lithium-Ionen-, Lithium-Polymer- oder Eisen-Phosphat-Zellen mit Zellspannungen zwischen 3 Volt und 5 Volt, insbesondere zwischen 3,6 Volt und 3,7 Volt eine Spannung des Akkupacks z. B. von 36 Volt bei einer Leistung von z. B. 2,2 Amperestunden erzielt ist. Durch geänderte Verschaltung der Akkuzellen 4 untereinander können auch niedrigere oder höhere Spannungen bei gleicher oder höherer Leistung erzielt werden.

Der Gehäusedeckel 3 des Akkupacks 1 ist im Ausführungsbeispiel mittels Befestigungsschrauben 5 am Akkugehäuse 2 festgelegt; auch andere Befestigungen wie eine Nietverbindung, eine Rastverbindung, eine Klebeverbindung, eine Schweißverbindung oder dgl. können zweckmäßig sein. In der Stirnseite 6 des geeignet festgelegten Gehäusedeckels 3 ist ein Anzeige- und Betätigungsfeld 7 ausgebildet. Im gezeigten Ausführungsbeispiel besteht das Anzeige- und Betätigungsfeld 7 aus vier Anzeigefenstern 8 sowie einem Betätigungsfeld 9. Das Anzeige- und Betätigungsfeld 7 ist mit einer flexiblen Folie 10 abgeklebt, so dass eine vollständige Abdichtung gegenüber der Umgebung gegeben ist.

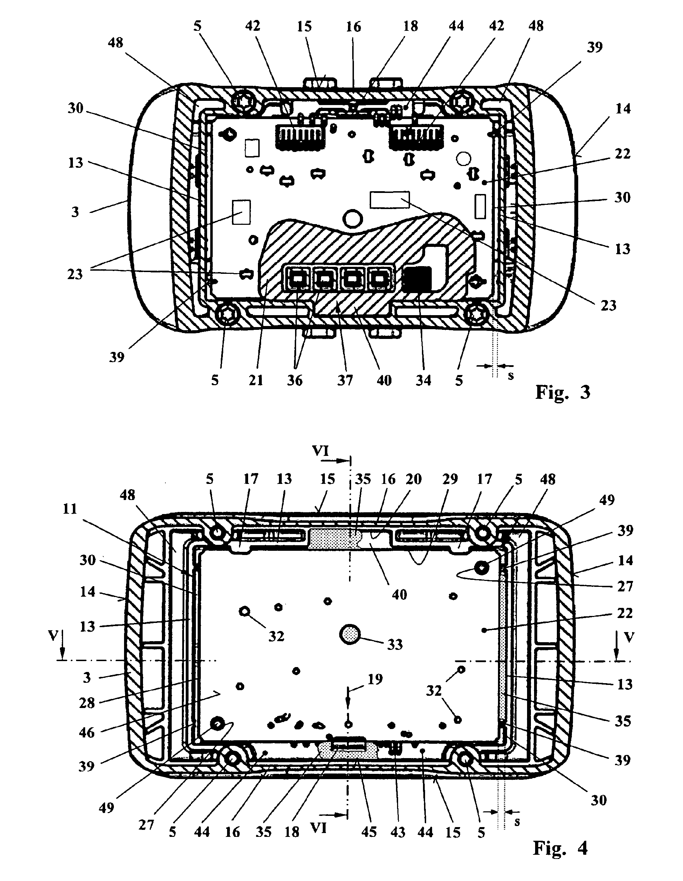

Wie die Fig. 3 bis 6 zeigen, ist der Gehäusedeckel 3 auf seiner den Akkuzellen 4 zugewandt liegenden Innenseite 12 mit einer Aufnahmeschale 11 ausgebildet, die - vgl. die Fig. 3 und 4 - durch einen äußeren Schalenrand 13 begrenzt ist. Auf den Schmalseiten 14 des etwa rechteckförmigen Deckels 3 ist der Schalenrand 13 körperlich ausgebildet, während er auf den Längsseiten 15 des Deckels zum Teil durch den Deckelrand 16 ausgebildet ist. Somit ist der umlaufende, geschlossene Schalenrand 13 über einen Teilumfang vom Deckelrand 16 des Gehäusedeckels 3 gebildet.

Auf der einen Längsseite 16 sind am Schalenrand 13 Niederhalter 17 ausgebildet, die über den Schalenrand 13 in die Aufnahmeschale 11 überstehen. Auf der gegenüberliegenden Längsseite 15 ist ein Rasthaken 18 vorgesehen, der in Pfeilrichtung 19 federnd zurückweichen kann und vorzugsweise in der Aufnahmeschale 11 liegt. Der Rasthaken 18 ist auf dem Boden 25 der Aufnahmeschale 11 gehalten.

Zwischen den Niederhaltern 17 ist in dem Schalenrand 13 eine Aussparung 20 ausgeformt, die der lagegenauen Positionierung eines Dichtelementes 21 dient.

In der Aufnahmeschale 11 ist eine Platine 22 aufgenommen, die eine Überwachungs- und/oder Steuerungsschaltung trägt, welche Betriebsparameter der im Akkupack 1 eingesetzten Akkuzellen 4 überwacht. Auf einer bestückten Platinenseite 24 liegen die elektronischen Bauelemente 23 der Schaltung. Die bestückte Platinenseite 23 liegt dem Boden 25 der Aufnahmeschale 11 zugewandt, wobei zur Positionierung der Platine 22 in der Aufnahmeschale 11 Abstandshalter 26 vorgesehen sind, deren freie Enden 49 als Positionierdorne in Positionieröffnungen 27 der Platine 22 eingreifen. Im gezeigten Ausführungsbeispiel ist die Platine 22 durch zwei Positionieröffnungen 27 lagegenau im Aufnahmetopf 11 ausgerichtet, wobei die Positionieröffnungen 27 in gegenüberliegenden Ecken der Platine 22 vorgesehen sind.

Die weitgehend spielfrei, vorzugsweise passgenau in die Positionieröffnungen 27 eingreifenden Enden 49 der Abstandshalter 26 liegen zudem an der bestückten Platinenseite 24 an, so dass die Platine 22 mit einem vorgegebenen Abstand a zum Boden 25 der Aufnahmeschale 11 positioniert ist. Der Abstand a ist so gewählt, dass keines der elektronischen Bauelemente 23 am Boden 25 der Aufnahmeschale 11 anliegt.

Die durch die Abstandshalter 26 lagegenau in der Aufnahmeschale 11 positionierte Platine 22 liegt mit den Platinenrändern 28, 29 mit einem Abstand s zum Schalenrand 13, wodurch - vorzugsweise umlaufend - zwischen den Platinenrändern 28 und 29 und dem Schalenrand 13 ein Spalt 30 gebildet ist. Der Abstand s hat eine maximale Größe von etwa 0,5 mm bis 3 mm, vorzugsweise etwa 1,5 mm.

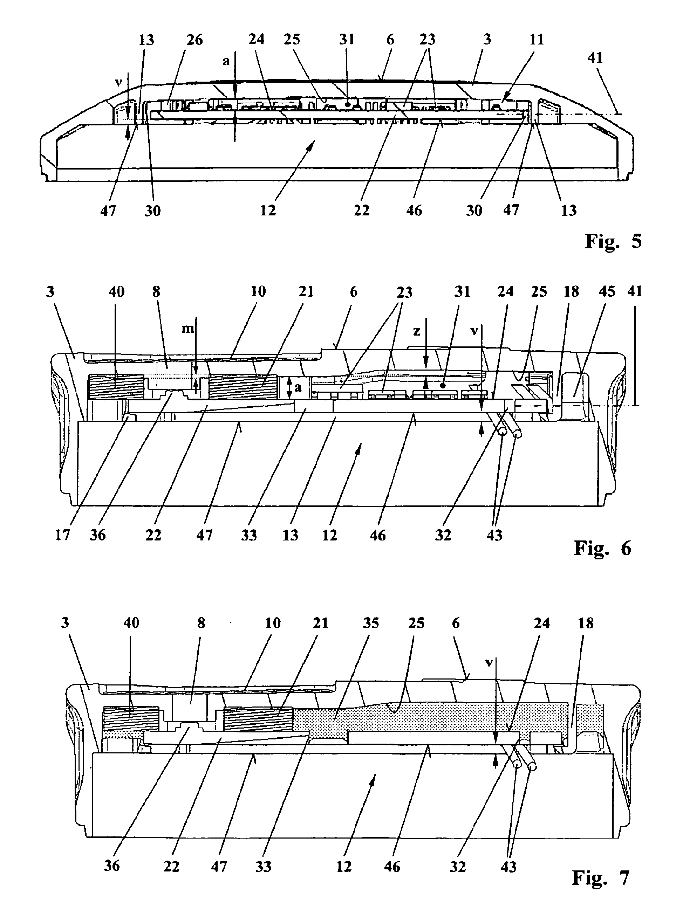

Der Schalenrand 13 steht - wie insbesondere Fig. 5 zeigt - um einen Überstand v über die Platine 22 bzw. die Platinenrückseite 46 über. Der Überstand v liegt im Bereich von etwa 0,5 mm bis 2,5 mm, insbesondere bei etwa 1,6 mm.

Durch die konstruktive Gestaltung der Aufnahmeschale 11 und des Schalenrandes 13 sowie die in die Aufnahmeschale 11 eingesetzte Platine 22 ist ein Füllraum 31 gebildet, der im Wesentlichen die minimale Höhe a aufweist und zweckmäßig über den umlaufenden Spalt 30 belüftet ist.

Es kann zweckmäßig sein, in der Platine 22 an geeigneten Stellen Belüftungsöffnungen 32 vorzusehen sowie eine - möglichst zentrale - Angussöffnung 33, über die der Füllraum 31 mit einer aushärtenden Vergussmasse 35 gefüllt wird. Vorteilhaft ist die Vergussmasse 35 wärmeleitend. Auf der bestückten Platinenseite 24 sind - den Anzeigefenstern 8 gegenüberliegend - Leuchtmittel wie z. B. LED's 36 angeordnet, welche über die Anzeigefenster 8 von außen wahrgenommen werden können. Auf der Platine 22 ist ferner ein Taster 34 gehalten, der über das Betätigungsfeld 9 von außen zu bedienen ist. Um zu gewährleisten, dass weder die als Anzeigeelemente 37 genutzten LED's 36 noch das Betätigungselement 38 durch die Vergussmasse 35 unbrauchbar wird, ist das Dichtelement 21 vorgesehen. Das Dichtelement kann als Formteil z. B. als Dichtrahmen mit einem Dichtrand bzw. einer Dichtlippe oder dgl. geeignet ausgebildet sein; im Ausführungsbeispiel ist das Dichtelement 21 ein Formteil und besteht vorzugsweise aus Schaummaterial, insbesondere aus Moosgummi. Es umgibt die Anzeigeelemente 37 bzw. das Betätigungselement 38 vollständig, so dass die so abgetrennten Räume frei von der Vergussmasse bleiben. Es ist vorgesehen, dass sich das Dichtelement 21 - vgl. Fig. 6 - über die gesamte Höhe a des Füllraums 31 erstreckt, wobei es zwischen der Platine 22 und dem Boden 25 der Aufnahmeschale 11 vorzugsweise verspannt gehalten ist. Wie aus Fig. 6 zu ersehen, wird das Dichtelement 21 um ca. 30% bis 50%, insbesondere etwa 40% in der Höhe gestaucht bzw. verpresst, was im Ausführungsbeispiel einem Maß m von etwa 1,2 mm entspricht. Die Höhe a des Füllraums 31 liegt im Bereich von 0,5 mm bis 3 mm; vorzugsweise ist die geringste Höhe a etwa 1,8 mm. Die unterschiedliche Höhe a ist bedingt durch einen Höhenversatz z im Boden 25 der Aufnahmeschale 11 (Fig. 6).

Zur Montage der Platine 22 mit einer Überwachungs- und/oder Steuerungsschaltung wird die Platine 22 mit der bestückten Platinenseite 24 voraus in die Aufnahmeschale 11 eingesetzt. Dabei wird zunächst der ein Platinenlängsrand 29 unter die Niederhalter 17 gesetzt, wobei Positionierstege 39 die präzise Ausrichtung der Platine 22 in der Aufnahmeschale 11 erleichtern. Nun wird die Platine 22 um den unter den Niederhaltern 17 liegenden Platinenrand 29 in die Aufnahmeschale 11 eingeschwenkt, wobei die freien Enden 49 der Abstandshalter 26 als Positionierdorne vorzugsweise passgenau in die Positionieröffnungen 27 der Platine eingreifen. Der Rasthaken 18 wird durch den Platinenrand federnd zurückgedrängt, bis er über den Platinenrand zurückschnappen kann; die Platine 22 ist lagegenau und unverlierbar in der Aufnahmeschale 11 gehalten.

Um zu gewährleisten, dass sowohl beim Einsetzen der Platine 22 in der Aufnahmeschale 11 als auch beim Einfüllen der Vergussmasse 35 in den Füllraum 31 das Dichtelement 21 nicht verrutscht, greift dieses mit einem Lagesicherungsabschnitt 40 in die Aussparung 20 des Schalenrandes 13 auf der Längsseite 15 des Deckels 3 ein. Die Aussparung 20 liegt etwa mittig zwischen den Niederhaltern 17.

Nach Einklipsen der Platine 22 ist das Dichtmaterial des Dichtelementes 21 um das Maß m zusammengedrückt, wodurch eine weitere Lagefixierung des Dichtelementes im Füllraum 31 gegeben ist und zugleich die Abdichtung gewährleistet ist.

Über die Angussöffnung 33 wird nun in den Füllraum 31 flüssige Vergussmasse eingefüllt, die sich im gesamten Füllraum 31 verteilt und die elektronischen Bauelemente 23 vollständig umschließt. Dabei wird so viel Vergussmasse eingefüllt, bis diese im Spalt 30 aufsteigt. Die Figuren 4 und 7 zeigen einen Schnitt durch einen entsprechend vergossenen Füllraum 31, wobei die Vergussmasse so weit im Spalt 30 aufgestiegen ist, dass alle offenen Kanten im Bereich der Ränder der Platine 22 sicher geschlossen sind. Das Füllungsniveau der Aufnahmeschale 11 liegt zweckmäßig auf Höhe der Rückseite 46 der Platine 22, kann vorteilhaft aber auch unterhalb der Rückseite 46 der Platine 22 liegen.

Als alternative oder zusätzliche Angussöffnung können die beiderseits des Rasthakens 18 verbleibenden Freiabschnitte 44 (Fig. 4) zwischen dem Plattenrand 29 und dem Deckelrand 16 genutzt werden. Im Bereich des Lagesicherungsabschnittes 40 des Dichtelementes 21 wird ebenfalls Vergussmasse 35 aufgefüllt, um offene Kanten im Bereich des Plattenrandes 29 zu schließen.

Ein Aufschwimmen der Platine 22 auf der flüssigen Vergussmasse 15 ist wirksam über die Niederhalter 17 und den Rasthaken 18 verhindert. Eine Lageveränderung in der Ebene 41 der Platine 22 ist sowohl durch die in die Positionieröffnungen 27 eingreifenden freien Enden 49 der Abstandshalter 26 verhindert als auch durch Positionierstege 39 im Spalt 30 zwischen den Platinenrändern 28 und 29 und dem Schalenrand 13.

Wie Fig. 3 zu entnehmen, sind auf der bestückten Platinenseite 24 Stecker 42 bzw. Buchsen für Anschlussleitungen 43 vorgesehen. Da die Stecker 42 bzw. Buchsen im Füllraum 31 liegen, werden diese mit einer aufgesetzten Buchse bzw. einem Stecker vergossen, so dass die Anschlussleitungen 43 zusammen mit ihren Steckern bzw. Buchsen in der Vergussmasse 35 vollständig eingeschlossen und fixiert sind.

Wie Fig. 4 zeigt, sind beiderseits des Rasthakens 18 Freiabschnitte 44 vorgesehen, durch welche die Anschlussleitungen 43 geführt sein können. Die Freiabschnitte 44 liegen innerhalb der Aufnahmeschale 11 und werden daher beim Einfüllen der Vergussmasse 35 ebenfalls mit Vergussmasse gefüllt, wodurch auch der zwischen dem Rasthaken 18 und dem Deckelrand 16 liegende Freiraum 45 gefüllt wird. Dadurch wird erreicht, dass die dort aushärtende Vergussmasse 35 als Sperrriegel eine Ausweichbewegung des Rasthakens 18 in Pfeilrichtung 19 unterbindet.

Fig. 4 zeigt schematisch den mit Vergussmasse 35 gefüllten Füllraum 31, wobei die ausgehärtete Vergussmasse in den Spalt 30 eingetreten ist, die Rückseite 46 der Platine 22 aber nicht überflutet.

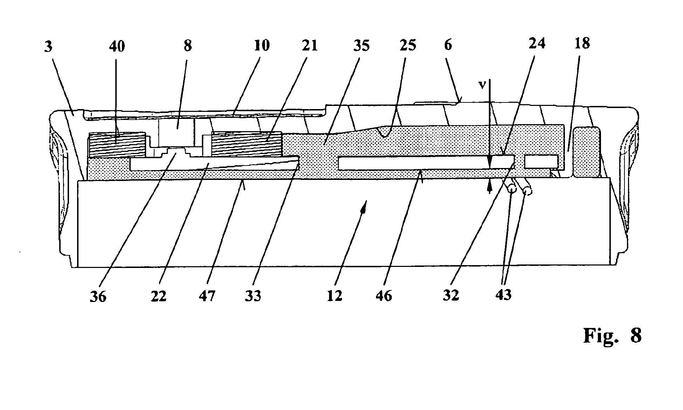

Es kann zweckmäßig sein, wie Fig. 8 zeigt, so viel Vergussmasse 35 in die Aufnahmeschale 11 einzufüllen, dass auch die Rückseite 46 der Platine vollständig von Vergussmasse 35 abgedeckt ist. Die Aufnahmeschale 11 wird somit bis zur Oberkante 47 des Schalenrandes 31 vollständig mit Vergussmasse gefüllt, so dass die Platine 22 vollständig von der ausgehärteten Vergussmasse eingeschlossen ist. Zweckmäßig ist - insbesondere an den Schmalseiten 14 der Aufnahmeschale 11 - je eine Überlaufrinne 48 angeordnet, die zur Aufnahme eventuell übertretender Vergussmasse dient.

Es kann zweckmäßig sein, die Anschlussleitungen 43 an geeigneter Stelle durch den Spalt 30 zwischen dem Platinenrand 28, 29 und dem Schalenrand 13 herauszuführen, um innerhalb des Akkugehäuses die freie Leitungslänge kurz zu halten.

## Patentansprüche

1. Akkupack für ein elektrisches Arbeitsgerät, insbesondere für ein handgeführtes Arbeitsgerät wie eine Heckenschere, eine Motorkettensäge, einen Trennschleifer, einen Freischneider oder dgl., bestehend aus einem Gehäuse (2) mit einem Gehäusedeckel (3), mit einer Vielzahl einzelner, im Gehäuse (2) angeordneter Akkuzellen (4), die elektrisch leitend miteinander verbunden sind, und mit einer im Akkupackgehäuse (2) vorgesehenen, auf einer Platine (22) angeordneten elektronischen Schaltung zur Überwachung von Betriebsparametern der Akkuzellen (4),
**dadurch gekennzeichnet, dass** der Gehäusedeckel (3) auf seiner den Akkuzellen (4) zugewandt liegenden Innenseite (12) eine Aufnahmeschale (11) aufweist, die durch einen äußeren Schalenrand (13) begrenzt ist, dass die Platine (22) in der Aufnahmeschale (11) aufgenommen ist, wobei der Platinenrand (28, 29) mit dem Schalenrand (13) einen Spalt (30) begrenzt und die Aufnahmeschale (11) einen Rasthaken (18) aufweist, der den Platinenrand (29) übergreift, wobei die Platine (22) mit Abstand (a) zu dem Boden (25) der Aufnahmeschale (11) liegt, und zwischen der Platine (22), dem Boden (25) der Aufnahmeschale (11) und dem Schalenrand (13) ein Füllraum (31) begrenzt ist, und dass der Füllraum (31) mit einer ausgehärteten Vergussmasse (35) so weit ausgefüllt ist, bis die Vergussmasse (35) so weit im Spalt (30) aufgestiegen ist, dass alle offene Kanten im Bereich der Ränder der Platine (22) sicher geschlossen sind.

2. Akkupack nach Anspruch 1,
**dadurch gekennzeichnet, dass** in dem Füllraum (31) von der Platine (22) getragene Bauteile (23) der elektronischen Schaltung liegen.

3. Akkupack nach Anspruch 1 oder 2,
**dadurch gekennzeichnet, dass** die Platine (22) mit ihrer die elektronischen Bauteile (23) aufweisenden, bestückten Platinenseite (24) dem Boden (25) der Aufnahmeschale (11) zugewandt liegt.

4. Akkupack nach einem der Ansprüche 1 bis 3,
**dadurch gekennzeichnet, dass** die Platine (22) durch Abstandshalter (26) mit vorgegebenem minimalen Abstand (a) zum Boden (25) der Aufnahmeschale (11) gehalten ist.

5. Akkupack nach Anspruch 4,
**dadurch gekennzeichnet, dass** die Abstandshalter (26) mit ihren freien Enden (49) vorzugsweise spielfrei in Positionieröffnungen (27) der Platine (22) eingreifen.

6. Akkupack nach einem der Ansprüche 1 bis 5,
**dadurch gekennzeichnet, dass** der Schalenrand (13) über einen Teilumfang von einem Deckelrand (16) des Gehäusedeckels (3) gebildet ist.

7. Akkupack nach einem der Ansprüche 1 bis 6,
**dadurch gekennzeichnet, dass** der Platinenrand (28, 29) mit dem Schalenrand (13) einen umlaufenden Spalt (30) begrenzt.

8. Akkupack nach einem der Ansprüche 1 bis 7,
**dadurch gekennzeichnet, dass** der Schalenrand (13) über die Platine (22) übersteht.

9. Akkupack nach einem der Ansprüche 1 bis 8,
**dadurch gekennzeichnet, dass** am Schalenrand (13) ein Niederhalter (17) vorgesehen ist, der den Platinenrand (29) übergreift.

10. Akkupack nach einem der Ansprüche 1 bis 9,
**dadurch gekennzeichnet, dass** der Rasthaken (18) federnd ausgebildet ist.

11. Akkupack nach Anspruch 9 und 10,
**dadurch gekennzeichnet, dass** der Rasthaken (18) und der Niederhalter (17) an einander gegenüberliegenden Platinenrändern (29) angreifen.

12. Akkupack nach einem der Ansprüche 1 bis 11,
**dadurch gekennzeichnet, dass** im Boden (25) der Aufnahmeschale (11) ein Anzeigeelement (37) und/oder ein Betätigungselement (38) angeordnet ist, und das Anzeigeelement (37) und/oder das Betätigungselement (38) von einem Dichtelement (21) umgeben ist, welches sich über die Höhe (a) des Füllraums (31) erstreckt.

13. Akkupack nach Anspruch 12,
**dadurch gekennzeichnet, dass** das Dichtelement (21) aus einem Schaummaterial, insbesondere aus Moosgummi besteht.

14. Akkupack nach Anspruch 12 oder 13,
**dadurch gekennzeichnet, dass** das Dichtelement (21) mit einem Lagesicherungsabschnitt (40) in eine Aussparung (20) des Schalenrandes (13) eingreift.

15. Akkupack nach einem der Ansprüche 12 bis 14,
**dadurch gekennzeichnet, dass** das Dichtelement (21) zwischen der Platine (22) und dem Boden (25) der Aufnahmeschale (11) verspannt liegt.

16. Akkupack nach einem der Ansprüche 1 bis 15,
**dadurch gekennzeichnet, dass** auf der bestückten Platinenseite (24) ein Anschlussstecker (43) mit Anschlussleitungen (43) vorgesehen ist, und der Stecker (42) mit den Anschlussleitungen (43) von der ausgehärteten Vergussmasse (35) umschlossen ist.

17. Akkupack nach einem der Ansprüche 1 bis 16,
**dadurch gekennzeichnet, dass** die Aufnahmeschale (11) eine äußere Überlaufrinne (48) aufweist.

18. Akkupack nach einem der Ansprüche 1 bis 17,
**dadurch gekennzeichnet, dass** die Vergussmasse (35) die Platine (22) vollständig umschließt.

19. Akkupack nach einem der Ansprüche 1 bis 18,
**dadurch gekennzeichnet, dass** in der Platine (22) eine Angussöffnung (33) für die Vergussmasse (35) und/oder eine Belüftungsöffnung (32) ausgebildet ist.

## Claims

1. A battery pack for an item of electrical equipment, in particular for a hand-held item of electrical equipment such as a hedge trimmer, a motorised chainsaw, an angle grinder, a string trimmer or the like, consisting of a housing (2) with a housing cover (3), with a plurality of individual battery cells (4) arranged in the housing (2) which are joined together in electrically conductive manner, and with an electronic circuit provided in the battery-pack housing (2) and arranged on a printed circuit board (22) for monitoring operating parameters of the battery cells (4),
**characterised in that** the housing cover (3) on its inside (12) facing the battery cells (4) has a receiving shell (11) which is defined by an outer shell edge (13), **in that** the printed circuit board (22) is received in the receiving shell (11), the printed-circuit-board edge (28, 29) defining with the shell edge (13) a gap (30) and the receiving shell (11) having a locking hook (18) which engages across the printed-circuit-board edge (29), the printed circuit board (22) being at a distance (a) from the base (25) of the receiving shell (11), and a filling space (31) being defined between the printed circuit board (22), the base (25) of the receiving shell (11) and the shell edge (13), and **in that** the filling space (31) is filled with a hardened filling compound (35) until the filling compound (35) has risen so far in the gap (30) that all open edges in the region of the edges of the printed circuit board (22) are securely closed.

2. A battery pack according to Claim 1,
**characterised in that** components (23) of the electronic circuit which are carried by the printed circuit board (22) are located in the filling space (31).

3. A battery pack according to Claim 1 or 2,
**characterised in that** the printed circuit board (22) with its populated printed-circuit-board side (24) having the electronic components (23) lies facing the base (25) of the receiving shell (11).

4. A battery pack according to one of Claims 1 to 3,
**characterised in that** the printed circuit board (22) is held by spacers (26) at a predetermined minimum distance (a) from the base (25) of the receiving shell (11).

5. A battery pack according to Claim 4,
**characterised in that** the spacers (26) engage with their free ends (49), preferably without play, in positioning openings (27) in the printed circuit board (22).

6. A battery pack according to one of Claims 1 to 5,
**characterised in that** the shell edge (13) is formed over a partial periphery of a cover edge (16) of the housing cover (3).

7. A battery pack according to one of Claims 1 to 6,
**characterised in that** the printed-circuit-board edge (28, 29) defines a circumambient gap (30) with the shell edge (13).

8. A battery pack according to one of Claims 1 to 7,
**characterised in that** the shell edge (13) protrudes over the printed circuit board (22).

9. A battery pack according to one of Claims 1 to 8,
**characterised in that** a holding-down means (17) is provided on the shell edge (13), which means engages across the printed-circuit-board edge (29).

10. A battery pack according to one of Claims 1 to 9,
**characterised in that** the locking hook (18) is formed to be resilient.

11. A battery pack according to Claims 9 and 10,
**characterised in that** the locking hook (18) and the holding-down means (17) acts on opposing printed-circuit-board edges (29).

12. A battery pack according to one of Claims 1 to 11,
**characterised in that** a display element (37) and/or an actuating element (38) is arranged in the base (25) of the receiving shell (11), and the display element (37) and/or the actuating element (38) is surrounded by a sealing element (21) which extends over the height (a) of the filling space (31).

13. A battery pack according to Claim 12,
**characterised in that** the sealing element (21) consists of a foam material, in particular of foam rubber.

14. A battery pack according to Claim 12 or 13,
**characterised in that** the sealing element (21) engages with a position-securing section (40) in a recess (20) in the shell edge (13).

15. A battery pack according to one of Claims 12 to 14,
**characterised in that** the sealing element (21) lies braced between the printed circuit board (22) and the base (25) of the receiving shell (11).

16. A battery pack according to one of Claims 1 to 15,
**characterised in that** a connection plug (43) with connecting cables (43) is provided on the populated printed-circuit-board side (24), and the plug (42) with the connecting cables (43) is surrounded by the hardened filling compound (35).

17. A battery pack according to one of Claims 1 to 16,
**characterised in that** the receiving shell (11) has an outer overflow channel (48).

18. A battery pack according to one of Claims 1 to 17,
**characterised in that** the filling compound (35) completely surrounds the printed circuit board (22).

19. A battery pack according to one of Claims 1 to 18,
**characterised in that** a gate opening (33) for the filling compound (35) and/or a ventilation opening (32) is formed in the printed circuit board (22).

## Revendications

1. Batterie pour un appareil électrique, en particulier pour un appareil tenu à la main tel qu'un taille-haie, une tronçonneuse, une meuleuse, une débroussailleuse ou un appareil similaire, composée d'un boîtier (2) avec un couvercle de boîtier (3), avec plusieurs éléments d'accumulateur (4) individuels disposés dans le boîtier (2) et reliés électriquement entre eux, et avec un circuit électronique prévu dans le boîtier de batterie (2), disposé sur une carte (22) et destiné à surveiller des paramètres de fonctionnement des éléments d'accumulateur (4),
**caractérisée en ce que** le couvercle de boîtier (3) présente sur son côté intérieur (12) tourné vers les éléments d'accumulateur (4) une coque de réception (11) qui est délimitée par un bord de coque extérieur (13), **en ce que** la carte (22) est logée dans la coque de réception (11), étant précisé que le bord de carte (28, 29) délimite avec le bord de coque (13) un interstice (30) et que la coque de réception (11) présente un crochet d'encliquetage (18) qui empiète sur le bord de carte (29), et étant précisé que la carte (22) se trouve à une distance (a) du fond (25) de la coque de réception (11) et qu'un espace de remplissage (31) est défini entre la carte (22), le fond (25) de la coque de réception (11) et le bord de coque (13), et **en ce que** l'espace de remplissage (31) est rempli avec une masse de scellement (35) jusqu'à ce que ladite masse de scellement soit montée dans l'interstice (30) de telle sorte que toutes les arêtes ouvertes dans la zone des bords de la carte (22) sont fermées de manière sûre.

2. Batterie selon la revendication 1,
**caractérisée en ce que** des composants (23) du circuit électronique portés par la carte (22) se trouvent dans l'espace de remplissage (31).

3. Batterie selon la revendication 1 ou 2,
**caractérisée en ce que** la carte (22) est tournée, avec sa face garnie (24) présentant les composants électroniques (23), vers le fond (25) de la coque de réception (11).

4. Batterie selon l'une des revendications 1 à 3,
**caractérisée en ce que** la carte (22) est maintenue par des éléments d'écartement (26) à une distance minimale (a) prédéfinie du fond (25) de la coque de réception (11).

5. Batterie selon la revendication 4,
**caractérisée en ce que** les éléments d'écartement (26) pénètrent avec leur extrémité libre (49), de préférence sans jeu, dans des ouvertures de positionnement (27) de la carte (22).

6. Batterie selon l'une des revendications 1 à 5,
**caractérisée en ce que** le bord de coque (13) est formé sur une partie de circonférence par un bord de couvercle (16) du couvercle de boîtier (3).

7. Batterie selon l'une des revendications 1 à 6,
**caractérisée en ce que** le bord de carte (28, 29) définit avec le bord de coque (13) un interstice circulaire (30).

8. Batterie selon l'une des revendications 1 à 7,
**caractérisée en ce que** le bord de coque (13) dépasse de la carte (22).

9. Batterie selon l'une des revendications 1 à 8,
**caractérisée en ce qu'**il est prévu sur le bord de coque (13) un élément presseur (17) qui empiète sur le bord de carte (29).

10. Batterie selon l'une des revendications 1 à 9,
**caractérisée en ce que** le crochet (18) est conçu pour faire ressort.

11. Batterie selon les revendications 9 et 10,
**caractérisée en ce que** le crochet d'encliquetage (18) et l'élément presseur (17) agissent sur des bords de plaque (29) opposés.

12. Batterie selon l'une des revendications 1 à 11,
**caractérisée en ce qu'**il est prévu dans le fond (25) de la coque de réception (11) un élément indicateur (37) et/ou un élément d'actionnement (38), et l'élément indicateur (37) et/ou l'élément d'actionnement (38) sont entourés par un élément d'étanchéité (21) qui s'étend sur la hauteur (a) de l'espace de remplissage (31).

13. Batterie selon la revendication 12,
**caractérisée en ce que** l'élément d'étanchéité (21) se compose d'une mousse, en particulier de caoutchouc cellulaire.

14. Batterie selon la revendication 12 ou 13,
**caractérisée en ce que** l'élément d'étanchéité pénètre avec une partie de blocage de position (40) dans un creux (20) du bord de coque (13).

15. Batterie selon l'une des revendications 12 à 14,
**caractérisée en ce que** l'élément d'étanchéité (21) est serré entre la carte (22) et le fond (25) de la coque de réception (11).

16. Batterie selon l'une des revendications 1 à 15,
**caractérisée en ce qu'**il est prévu sur la face de carte garnie (24) une fiche de raccordement (42) avec des conducteurs de raccordement (43), et la fiche (42) avec les conducteurs de raccordement (43) est entourée par la masse de scellement (35) durcie.

17. Batterie selon l'une des revendications 1 à 16,
**caractérisée en ce que** la coque de réception (11) présente une rainure de débordement extérieure (48).

18. Batterie selon l'une des revendications 1 à 17,
**caractérisée en ce que** la masse de scellement (35) entoure complètement la carte (22).

19. Batterie selon l'une des revendications 1 à 18,
**caractérisée en ce qu'**une ouverture d'injection (33) pour la masse de scellement (35) et/ou une ouverture d'aération (32) sont prévues dans la carte (22).
